Europäisches Patentamt

European Patent Office

Office européen des brevets

(11) Publication number: **0 294 499 B1**

## EUROPEAN PATENT SPECIFICATION

(45) Date of publication of patent specification: **26.08.92**   (51) Int. Cl.⁵: **G06F 9/46**

(21) Application number: **87108300.2**

(22) Date of filing: **09.06.87**

(54) **Control scheme for segmented buffers based on a shared reference count.**

(43) Date of publication of application:
**14.12.88 Bulletin 88/50**

(45) Publication of the grant of the patent:
**26.08.92 Bulletin 92/35**

(84) Designated Contracting States:
**DE FR GB**

(56) References cited:
**US-A- 3 839 706**

**MICROPROCESSING AND MICROPROGRAM-
MING, vol. 12, no. 3/4, October/November
1983, pages 193-198, North-Holland, Amster-
dam, NL; L.J.M. NIEWENHUIS: "MIRTEX: a
real-time, multi-tasking executive for micro-
processors"**

**IBM TECHNICAL DISCLOSURE BULLETIN, vol.
28, no. 5, October 1985, pages 1908-1910,
New York, US; "Method to allocate and de-
allocate a device buffer"**

**IEEE TRANSACTIONS ON SOFTWARE ENGI-
NEERING, vol. SE-8, no. 6, November 1982,
pages 597-604, IEEE, New York, US; A. LOCK-
MAN et al.: "Unidirectional transport of
rights and take-grant control"**

**ASSOCIATION FOR COMPUTING MACHIN-
ERY, PROCEEDINGS OF THE 24TH NATIONAL
CONFERENCE, New York, 28th August 1969,
pages 419-429, A.C.M. Publication; S.
MOTOBAYASHI et al.: "The HITAC5020 time
sharing system"**

(73) Proprietor: **International Business Machines
Corporation
Old Orchard Road
Armonk, N.Y. 10504(US)**

(72) Inventor: **Gantenbein, Dieter
Isengrund 11
CH-8134 Adliswil(CH)**
Inventor: **Hauser, Rainer Friedrich
Seestrasse 167
CH-8800 Thalwil(CH)**
Inventor: **Mumprecht, Eduard Peter
Neuwiesenstrasse 32
CH-8706 Meilen(CH)**

(74) Representative: **Barth, Carl Otto
International Business Machines Corp.
Zurich Research Laboratory Intellectual
Property Department Säumerstrasse 4
CH-8803 Rüschlikon(CH)**

## Description

### *FIELD OF INVENTION*

Present invention is concerned with the allocation and shared use of buffers in a data processing system, and in particular with the arbitrary segmentation of an allocated buffer and the passing of access rights for selectable portions of a buffer in memory.

### *BACKGROUND*

In data processing, it is often necessary that two processors or processes access the same data. This is not only the case for general memory, but also for temporarily assigned buffers. The common access may be necessary because more than one processor is required for processing a set of data properly, or it can be used as a convenient way for passing data generated or obtained by one processor, to another processor which uses it subsequently. In the following, the term "process" generally designates an entity using a buffer, which may be either a processor or a process (i.e. a program executing a specific task).

Several methods of storage allocation and shared usage of storage space are known and were e.g. disclosed in the following publications:

(a) IBM Manual SC19-6203 (August 1983): "Virtual Machine/System Product, System Programmer's Guide." In this manual, an operating system is described in which free storage can be allocated by a GETMAIN or DMSFREE macro; allocated storage can be released by a FREEMAIN or DMSFRET macro. No shared usage nor a reference count are mentioned in connection with these allocation/release operations. No partitioning of allocated space is provided.

(b) I.L.Traiger:" Virtual Memory Management for Database Systems." ACM Operating Systems Review, Vol.16 No.4, Oct.1982, pp.26-48. In this publication, a database system is described in which buffer management locates a requested page in VM or loads it therein and provides a locate ("fix") function which returns the page's VM address to the requestor. Multiple processes can access the same copy of a page. A fix count is maintained for each page, indicating the number of requests for transactions; the fix count is decreased each time a transaction is completed. A page is released from a page frame in VM and returned to disk storage only when the respectice fix count goes to zero. The procedure does only handle pages of fixed size; neither variable buffer size nor partitioning of allocated storage space is provided.

(c) A.Bensoussan et al.: "The Multics Virtual Memory." ACM Second Symposium on Operating System Principles. Princeton University, October 20-22, 1969, pp.30-42. A system is described in which each segment in storage is defined by a first user and has its own descriptor which comprises names of allowed users etc. Release of a segment is not discussed; names of all users must be kept in tables by the system. No partitioning of allocated storage space or usage of a reference count is mentioned.

Usually, common access is either granted to a process by a management or service unit, upon request; or a process which already got the access right to a storage area (such as a temporary buffer) can "delegate" access rights for the same area to other processes but then has to keep track of all existing access rights for "its" storage area, even so if it needs no longer the access for itself.

This is undesirable e.g. in a case where the first process has finished its work on some data, has stored them in a buffer assigned to it and would not need any further relation to that buffer, whereas another process (which obtained an access right from the first process) would still work on the buffer contents for some time.

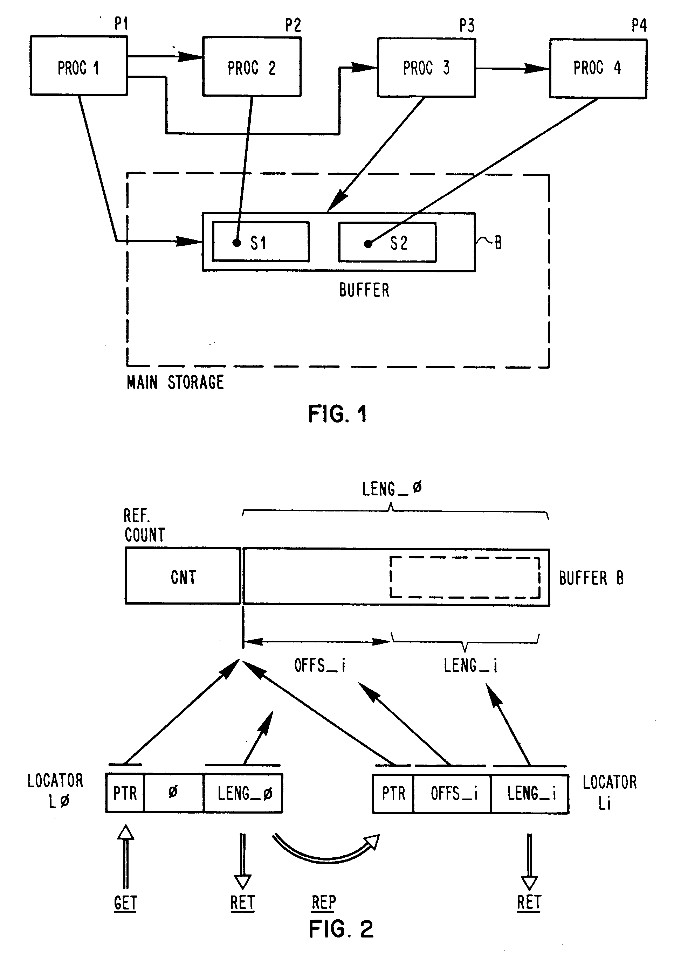

The situation is exemplified in Fig.1. A buffer B was allocated to a process P1 by the management program of main memory. Together with an assisting process P2 to whom P1 gave access right to a subsection S1 of the buffer B, P1 works on a problem, leaving resulting data in B. Another process P3 may have to work independently on these result data, and would be given an access right to the whole buffer B by P1. P1 and P2, after finishing their work, may not need any relation to B any more, but P3 has still a requirement for the data, and even may wish to give subsequently access right to a subset of the stored data in subsection S2 to another process P4.

This is the situation where the invention can greatly help to simplify operations.

### *OBJECTS OF THE INVENTION*

It is an object of the invention to devise a method of shared access by plural users to a buffer in memory, which allows a simple segmentation and arbitrary partitioning of that buffer with a minimum in housekeeping operations.

A further object of the invention is a buffer segmentation method by which any user can easily delegate access rights for a whole buffer or selectable portions of it to another user by a few simple operations.

Another object of the invention is a shared buffer access and segmentation method in which the first or initial user of a buffer can pass access rights to other users without the need of keeping record thereof, and in which this initial user can relinquish usage of the buffer and any connection to it even if other users are still operating with such buffer, and in which the whole buffer can be finally released by any user last using it or a partial segment thereof, without any involvement by the first or initial user.

## SUMMARY OF THE INVENTION

The objects of the invention are achieved by a method as defined in claim 1. In this method, three simple operations are provided for transferring basic buffer requests and buffer segment requests as well as release messages to the memory management system; a locator defining any buffer segment is used as the access token which is issued by memory management and can be passed between users (processes). A single reference count is maintained for the whole buffer and any partition of it (i.e. all segments, even if they overlap), so that the handling of buffer segments is greatly simplified.

These and further advantages of the invention will become apparent from the following detailed description of an embodiment, with reference to the drawings.

## LIST OF DRAWINGS

Fig.1 illustrates generally the situation in which the invention is used;

Fig.2 shows the principle of the invention with the three basic operations for requesting and releasing buffer segments;

Fig.3 shows the formats of the three basic operations and of the locator used in the method of the invention;

Fig.4 is an example for a buffer allocation table;

Fig.5 is a diagram of a more detailed example of a buffer allocation and segmentation sequence involving three users;

Fig.6 shows an alternative solution for buffer addressing by a pointer and for storing the shared reference count.

## DETAILED DESCRIPTION

### Principles of Invented Buffer Allocation Method

In Fig.2, the principle of the buffer allocation and segmentation/replication procedure is illustrated. It is based on three simple operations: GET, REPLICATE, and RETURN.

As a prerequisite, it is assumed that in the data processing system where the invention is implemented, a mechanism exists which manages the storage (memory) resources of the system. This mechanism will be termed "memory management" in the following. This mechanism holds a record of the total available memory space and about those sections or areas of memory which are allocated to a program or process. Upon a request by a process requiring memory space, memory management determines from its records where a memory section of the required size is still free (unused), allocates this section to the requesting process, and changes its records accordingly. When the process to which the section was allocated notifies memory management that it no longer needs the allocated space, memory management deallocates it, i.e. it returns the repective section to the "free" memory space by changing its records. Such memory management techniques are well known, e. g. from the book by P.A.Janson "Operating Systems - Structures and Mechanisms", Academic Press 1985 (Chapter V.2: Main Memory Management - Space Allocation, pp.110-116).

### GET Function

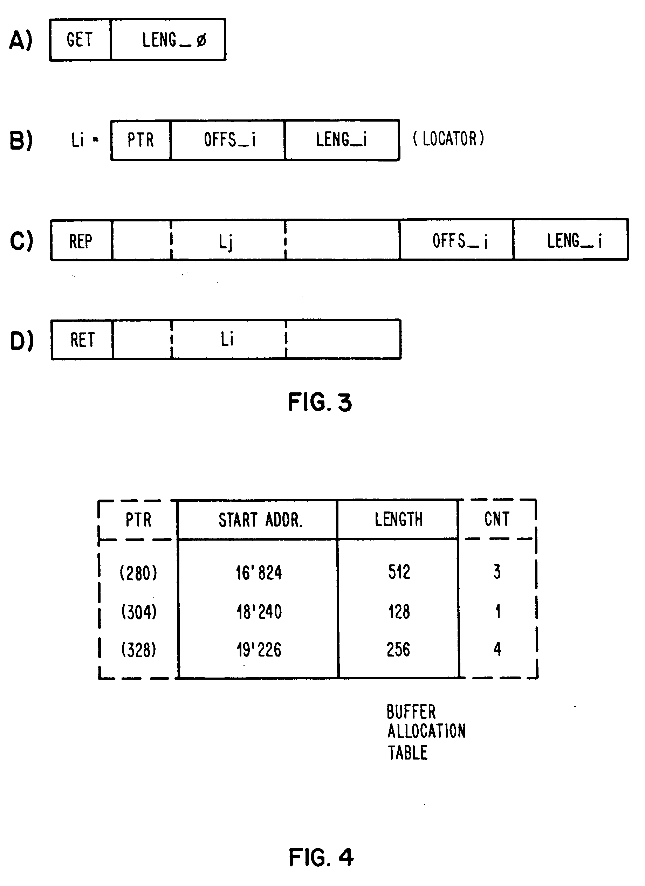

When a process initially requires a buffer of given size, it sends a GET request to the memory management of the main memory. The format of the GET request (as well as other formats) is shown in Fig.3. The only argument is a simple value (e.g. 2 bytes) giving the length of the requested buffer in number of bytes.

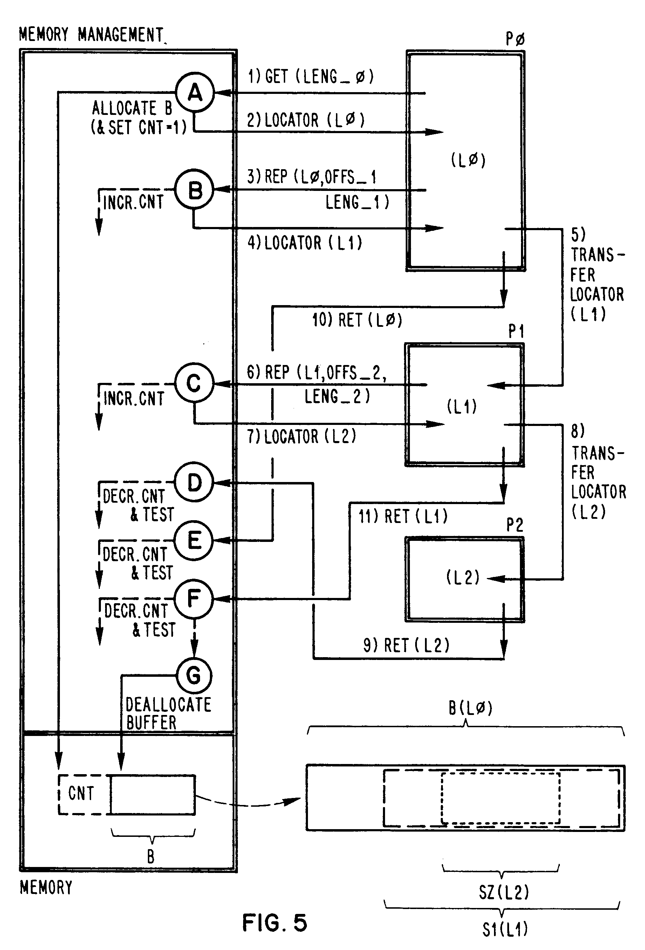

Memory management then searches for a free space of the given length in main memory and allocates this space, entering the start address pointer and the length value into an allocation table (as usual), cf. Fig.4. It also opens a counter for a reference count, which can be situated in the allocation table as additional entry (as shown in Fig.4) but could also be a portion of the buffer itself, e.g. its first byte, or a preamble to the buffer (as indicated in Figs.2 and 5). The reference count indicates how many access rights exist for the respective buffer or a portion of it, and is initially set to 1.

Now, memory management returns a locator to the requesting process, whose format is shown in Fig.3B. The locator comprises a pointer PTR by which the start address of the allocated buffer is identified (it can be the start address itself), an offset value, and a length value. In the initial or first locator, the offset value is zero and the length value corresponds to the full length of the allocated buffer. This locator gives the requesting process the right to use the identified buffer, but also to transfer the access right for the whole buffer or any portion (subsection) of it to another process.

It should be noted that a memory allocation table is only one possibility for the memory management program to keep track of allocated memory space. Another possibility is e.g. the concatenation of allocated buffers, the allocation information being stored in one field in front of each buffer where also the field for the usage count of present invention can be located.

### REPLICATE Function

When any process is to be given the access right to a portion of a buffer already allocated to another process, a REPLICATE request is sent to memory management. The format is shown in Fig.3C. The REPLICATE request contains the locator identifying the basic buffer, plus an additional offset value and an additional length value to indicate the length of the requested segment and its location within the basic buffer (cf. Fig.2).

Upon receiving the REPLICATE request, memory managment does at least the following:

(a) Increase the reference count in the counter assigned to the basic buffer (identified by the pointer) by one unit;

(b) Return another locator (of the format shown in Fig.3B) which comprises: The (basic) pointer, the second offset, and the second length which were given in the REPLICATE request. This locator is first furnished to the process having issued the REPLICATE request, but can then be forwarded to the process which should use the "replicated" buffer segment. Any locator generated/returned in response to a REPLICATE request gives the same right to its holder as the first locator which was generated in response to the initial GET request: The owning process can use the identified buffer segment but it can also confer the right to use that subsegment or a portion of it, to another process.

It should be noted that the buffer segment allocated in response to a REPLICATE request can overlap another segment of the same buffer. It can also be equal in size to the whole buffer (if the locater in the REPLICATE request was the initial locator of the buffer, and the offset and length values which are additionally given in the REPLICATE request are identical to those of the initial locator).

Memory management, in addition to just issuing a locator to the requesting process, can also do some checks to ensure proper operation: It can test whether the locator contained in the REPLICATE request identifies a buffer space that is allocated, it can test whether the offset and length of the requested buffer segment are within the range of the initial (basic) buffer, and it can also set up a table with additional information for each buffer so that further tests or operations may be done in connection with each change of access rights to an allocated buffer. However, none of these additional tasks need be performed in a system using the invention. It is only necessary for memory management to have a record of the basic buffer allocation, to have a reference counter associated with it, to issue a locator in response to a GET or REPLICATE request, and to identify the reference counter, change its contents and test the new contents upon reception of a locator.

To resume: Any process having the access right to a buffer or a buffer segment, i.e. any process possessing a locator, can further delegate its access right (for the whole or for a portion of "its" segment) to another process; the reference counter associated with the buffer (pointer) reflects the number of issued locators and thus the number of existing access rights to the whole buffer or any portion of it.

### RETURN Function

When a process no longer needs the buffer or segment allocated to it by a locator, it sends a RETURN message to memory management which just comprises the respective locator (cf. Fig.3D).

Upon receiving the RETURN message, memory management accesses the reference counter identified by the pointer, and decreases its contents by one. Furthermore, it checks whether the reference count has become zero. If that is true, memory management deallocates the whole buffer by deleting the entry in the allocation table (and doing other usual steps connected with a deallocation procedure) because no more process uses the whole buffer or any portion of it. The reference counter is also deleted (if it was situated in a location other than the allocation table or the buffer itself).

It is important to note that the last RETURN operation for an allocated buffer need not be caused by the process initially requesting the whole buffer. When this first (requesting) process does not need the buffer any more, it can "sign off" by returning the locator to memory management in a RETURN message, and it need not keeping any record. The other processes which later "signed on" to the buffer can continue to use it independently without any involvement of the first requesting process.

It should be noted that one process can own (hold) a plurality of locators which are associated with the same physical buffer B. A first process P1 which "owns" the whole buffer B, could e.g. obtain one locator L1 for the first quarter of the buffer length and another locator L2 for the last third of the buffer length, and could pass both locators to the same process P2, which would then use them independently for accessing the respective buffer segments.

In a formal way, the three operations constituting the invented buffer allocation and segmentation method can be described as follows (procedure call notation):

*     locator := GET (length)

*

*     locator := REP (locator, offset, length)

*

*         RET (locator)

An important feature of present invention is the fact that a single reference count (CNT) is provided for a whole buffer and for its subsections (segments). Thus, it is not necessary to establish for each portion of a buffer to which a separate access right is given, a separate reference count. This simplifies housekeeping operations significantly and in particular allows that the initial requestor of the buffer can "sign off" (RETURN its locator) before the whole buffer is deallocated, and that a process holding an access right (locator) for only a partial segment of the buffer, can be the final process which releases the whole buffer for deallocation.

### Detailed Example

A more detailed example of the buffer allocation and segmentation procedure of present invention is now explained in connection with Fig.5. For the example it is assumed that three processes P0, P1, and P2 are involved; that P0 initially requests a buffer B and gives the right to use segment S1 to process P1; and that P1 gives the right to use segment S2 to process P2.

The boxes in Fig.5 represent the three processes, memory management, and the memory itself, respectively. The numbered arrows between boxes indicate the transfer of information; and the circles with capital letters represent actions by the memory management.

In the following, memory management is designated as MM, and the basic or initially allocated buffer is designated as B.

Sequence of events for a complete buffer allocation, segmentation, and deallocation cycle:

1) P0 sends a GET request to MM, transferring the initial or basic length LENG_0 of the desired buffer.
   A) MM searches for a free memory space of size LENG_0 and allocates it; opens a counter and sets its contents CNT = 1; and generates a locator L0 comprising the buffer start address PTR, an initial offset OFFS_0 of value zero, and the initial length LENG_0.
2) The locator L0 is transferred to P0 which then owns it.
   *   P0 now works with buffer B. Subsequently a need arises
   *   to give an access right for a specific portion S1 of
   *   the buffer to process P1.
3) P0 sends a REPLICATE request to MM, comprising: Locator L0 (= PTR; OFFS_0; LENG_0), offset value OFFS__1 (= the desired distance between the start of buffer B and the start of segment S1), and length value LENG__1 (= the desired size of segment S1).

B) MM, using PTR of L0, finds the counter associated with buffer B (i.e. with PTR), and increases its contents by 1, so that the new contents CNT = 2; optionally, it checks whether a buffer B as specified by L0 is available (allocated), and whether the segment specified by OFFS__1 and LENG__1 fits into that buffer B; and finally MM generates another locator L1 comprising: PTR (the same pointer as in L0), OFFS__1, and LENG__1.

4) The locator L1, fully specifying buffer segment S1, is transferred to the requesting process P0.

5) P0 furnishes locator L1 to P1 which then owns it. P0 is no longer responsible for L1 and keeps no records about it.
* P1 now works with buffer segment S1. Subsequently a
* need arises to give an access right for a specific
* portion S2 of the buffer segment S1 to process P2.

6) P1 sends a REPLICATE request to MM, comprising:Locator L1 (= PTR; OFFS__1; LENG__1), offset value OFFS__2 (= the desired distance between the start of buffer B and the start of segment S2), and length value LENG__2 (= the desired size of segment S2).

C) MM, using PTR of L1, finds the counter associated with buffer B (i.e. with PTR) and increases its contents by 1, so that the new contents CNT = 3; optionally, it checks whether a buffer B which includes a buffer segment as specified by L1 is available (allocated), and whether the segment specified by OFFS__2 and LENG__2 fits into that buffer B; and finally MM generates another locator L2 comprising: PTR (the same pointer as in L0 and L1), OFFS__2, and LENG__2.

7) The locator L2, fully specifying buffer segment S2, is transferred to the requesting process P1.

8) P1 furnishes locator L2 to P2 which then owns it. P1 is no longer responsible for L2 and keeps no records about it.
* P2 now works with buffer segment S2. When it does not
* need S2 any more, it relinquishes the access right.

9) P2 sends a RETURN message containing locator L2 to MM.

D) MM, using PTR of L2, finds the counter associated with buffer B (i.e. with PTR) and decreases its contents by 1, so that the new contents CNT = 2; it also tests whether the new contents is zero. As the test result is negative, no further action occurs.
* While P1 still works with its buffer segment S1, P0
* determines that it no longer needs access to the buffer
* and relinquishes the access right.

10) P0 sends a RETURN message containing locator L0 to MM.

E) MM, using PTR of L0, finds the counter associated with buffer B (i.e. with PTR) and decreases its contents by 1, so that the new contents CNT = 1; it also tests whether the new contents is zero. As the test result is negative, no further action occurs.
* P1 is the last process which has an access right to
* any portion of buffer B (this fact, however, is not
* known to P1). When it does no longer require access to
* its buffer segment, it sends a relinquishing message to
* memory management as the other processes have done.

11) P1 sends a RETURN message containing locator L1 to MM.

F) MM, using PTR of L1, finds the counter associated with buffer B (i.e. with PTR) and decreases its contents by 1, so that the new contents CNT = 0; it also tests whether the new contents is zero. The test result now is positive, indicating that no process needs the buffer any more.

G) MM now deallocates the buffer B, i.e. it returns it to the free memory space.

The general operations of memory management such as finding a free buffer space area of requested size and then allocating it, and later deallocating that memory space and returning it to the free memory pool, are well known as was mentioned above already and therefore need not be described in detail.

In the following, numerical sample values are given for the above example of a buffer allocation and segmentation process. Reference is made to the allocation table shown in Fig. 4 in which the length value is given as number of bytes. The pointer used may be either the starting address of the respective buffer, or it may be an auxiliary address (given in parenthesis on the left side of the allocation table) which identifies a storage location where the starting address is found (as will be explained in the next section).

Assumption: Basic buffer B starts at storage location number 16'824, length is 512 bytes; segment 1 starts with an offset of 128 bytes, length is 256 bytes; and segment S2 starts with an offset of 192 bytes, length is 64 bytes.

GET Request:         GET / 512
Locator L0:          16'824 / 000 / 512
REPLICATE Request:   REP / 16'824 / 000 / 512 / 128 / 256
Locator L1:          16'824 / 128 / 256
REPLICATE Request:   REP / 16'824 / 128 / 256 / 192 / 064
Locator L2:          16'824 / 192 / 064
RETURN Message:      RET / 16'824 / 192 / 064 (L2)
RETURN Message:      RET / 16'824 / 000 / 512 (L0)
RETURN Message:      RET / 16'824 / 128 / 256 (L1)

### ALTERNATIVE POSSIBILITIES

a) Complete Transfer of Buffer or Segment:

Full and immediate transfer of a buffer or a segment from one process to another needs no REPLICATE request nor a RETURN operation. Only the respective locator would be transferred from process A to process B, and no other housekeeping operations are necessary.

b) Counter Location and Buffer Addressing:

As described above, the pointer PTR in a locator may be the start address of the respective buffer in memory; the counter could be a one byte field within the buffer or immediately preceding the buffer.

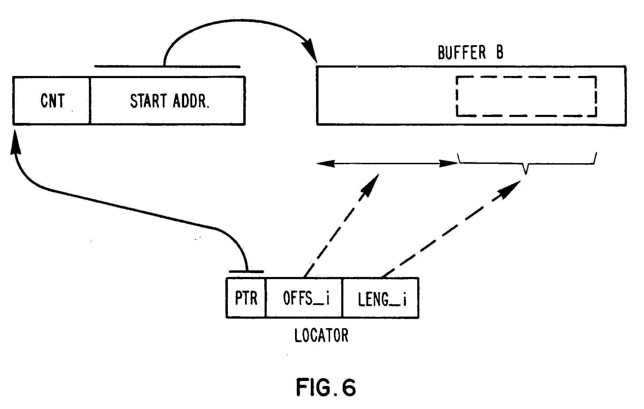

However, other solutions are possible. One alternative possibility is shown in Fig.6. The pointer PTR in each locator would point to an auxiliary storage location containing the counter (CNT, 1 byte) and the start address of the buffer associated with the pointer. Offset value and length value of the locator would determine the location and size of the respective buffer segment in the same way as was described already.

### Claims

1. Method for enabling shared access by plural users to a buffer in storage space, in which method a user can request allocation of storage space from memory management, and in which a reference count is maintained for allocated storage space to indicate its current number of users;
   characterized by the following steps being executed by memory management:
   a) upon receiving an initial request (GET) from a first user indicating the size (LENG__0) of the required buffer:
      - allocating a basic buffer (B) of requested size,
      - returning to the first user a first locator (L0) identifying said basic buffer (B) by a pointer (PTR), an offset value (OFFS__0), and a length value (LENG__0), whereby a user having received a locator (Lj) is entitled to request for the allocation of any portion of the corresponding buffer using a replication request (REP),
      - opening a reference count (CNT) for said basic buffer (B), which is initially set to 1;
   b) upon receiving a replication request (REP) of an entitled user for all or a portion of said basic buffer (B) as identified by said first locator (L0) and comprising another offset value (OFFS__i) and another length value (LENG__i):
      - returning another locator (Li) identifying a buffer segment being equal to said basic buffer (B) or a requested portion of it to the requesting user, said other locator (Li), which could be transferred to another user, comprising said pointer (PTR) of the first locator (L0), said other offset value (OFFS__i), and said other length value (LENG__i) defining the position and length of said buffer segment,
      - increasing the value of the reference count associated with the basic buffer (B) by one unit;
   c) handling any further requests from users for all or a portion of any buffer segment identified by a locator related to said basic buffer (B), in the same way as in step b;
   d) upon receiving a release (RET) message for a buffer segment identified by any locator (Li):
      - determining the associated basic buffer (B),
      - decreasing the respective reference count by one unit;
   e) when the reference count (CNT) reaches count value zero, deallocating the respective basic buffer (B);

EP 0 294 499 B1

whereby buffer segmentation and partial allocation is possible without the need for memory management to keep a record of users and segments of the basic buffer (B),

and whereby the first user of the basic buffer (B) need not keep any record of other users of the same buffer or any segment thereof, and can return its locator by a release (RET) message to memory management prior to another user of a segment of said basic buffer, so that final deallocation of the basic buffer may be caused by such other user when it returns its locator to memory management by a release (RET) message.

2. Method in accordance with claim 1, characterized by the following additional step:
   providing a storage field for said reference count (CNT) within said basic buffer (B).

3. Method in accordance with claim 1, characterized by the following additional step:
   providing a storage field for said reference count (CNT) adjacent to the starting position of said basic buffer (B).

4. Method in accordance with claim 1, characterized by the following additional step:
   providing an intermediate storage location comprising a field for storing the starting address of said basic buffer (B) and comprising another field for storing said reference count (CNT), said pointer designating the address of said intermediate storage location.

5. Method in accordance with claim 1, characterized in that the offset value (OFFS__0) in said first locator (L0) is equal to zero.

**Patentansprüche**

1. Verfahren zum Ermöglichen eines gemeinsamen Zugriffs von mehreren Benutzern auf einen Puffer in einem Speicherraum, wobei nach diesem Verfahren ein Benutzer eine Zuweisung eines Speicherraums von einer Speicherverwaltung anfordern kann und bei welchem eine Referenzzählung für einen zugewiesenen Speicherraum aufrechterhalten wird, um seine aktuelle Nummer von Benutzern anzuzeigen,
   gekennzeichnet durch die folgenden, von einer Speicherverwaltung ausgeführten Schritte:
   (a) nach dem Empfangen einer Anfangsanforderung (GET) von einem ersten Benutzer, Anzeigen der Größe (Leng__O) des erforderlichen Puffers,
   Zuweisen eines Basispuffers (B) erforderlicher Größe,
   Rückführen eines ersten Lokalisierers (LO), welcher mittels eines Zeigers (PTR) den Basispuffer (B) identifiziert, eines Abweichungswertes (OFFS__O) und eines Längenwertes (LENG__O) zu dem ersten Benutzer, wodurch ein Benutzer, der einen Lokalisierer (Li) empfangen hat, berechtigt ist, unter Verwendung einer Wiederholungsanforderung (REP) die Zuweisung irgendeines Teils des entsprechenden Puffers anzufordern,
   Beginnen einer Referenzzählung (CNT) für den Basispuffer (B), die ursprünglich auf 1 gesetzt ist;
   (b) nach dem Empfangen einer Wiederholungsanforderung (REP) eines berechtigten Benutzers für den ganzen Basispuffer (B) oder einen Teil desselben, wie von dem ersten Lokalisierer (LO) identifiziert, und mit einem anderen Abweichungswert (OFF__i) und einem anderen Längenwert (LENG__i):
   Rückführen eines anderen Lokalisierers (Li), der ein Puffersegment identifiziert, das gleich ist dem Basispuffer (B) oder einem erforderlichen Teil desselben, zu dem anfordernden Benutzer, wobei der andere Lokalisierer (Li), der zu einem anderen Benutzer übertragen werden könnte, den Zeiger (PTR) des ersten Lokalisierers (LO) enthält und der andere Abweichungswert (OFFS__i) und der andere Längenwert (LENG__i) die Position und die Länge des Puffersegments definieren,
   Erhöhen des Wertes der Referenzzählung, welche dem Basispuffer (B) zugeordnet ist, um eine Einheit;
   (c) Behandeln aller weiteren Anforderungen von Benutzern für irgendein ganzes Puffersegment oder einen Teil desselben, das von einem Lokalisierer mit Bezug auf den Basispuffer (B) identifiziert ist, auf dieselbe Weise, wie bei dem Schritt b;
   (d) nach dem Empfangen einer Freigabe (RET)-Nachricht für ein von irgendeinem Lokalisierer (Li) identifiziertes Puffersegment:
   Bestimmen des zugeordneten Basispuffers (B),
   Verringern der entsprechenden Referenzzählung um eine Einheit,

8

EP 0 294 499 B1

(e) wenn die Referenzzählung (CNT) den Zählwert Null erreicht; Freigeben des entsprechenden Basispuffers (B);

wodurch eine Puffersegmentierung und eine teilweise Zuweisung möglich ist, ohne daß es für eine Speicherverwaltung notwendig ist, über Benutzer und Segmente des Basispuffers (B) Buch zu führen, und wodurch der erste Benutzer des Basispuffers (B) über andere Benutzer desselben Puffers oder irgendein Segment desselben kein Buch führen muß und vor einem anderen Benutzer eines Segments des Basispuffers durch eine Freigabe (RET)Nachricht seinem Lokalisierer zu einer Speicherverwaltung so rückführen kann, daß eine Endfreigabe des Basispuffers von einem solchen anderen Benutzer veranlaßt werden kann, wenn er durch eine Freigabe (RET)-Nachricht seinen Lokalisierer zu einer Speicherverwaltung rückführt.

2.   Verfahren nach Anspruch 1, gekennzeichnet durch den folgenden zusätzlichen Schritt:
Vorsehen eines Speicherfeldes für die Referenzzählung (CNT) innerhalb des Basispuffers (B).

3.   Verfahren nach Anspruch 1, gekennzeichnet durch den folgenden zusätzlichen Schritt:
Vorsehen eines, der Ausgangsposition des Basispuffers (B), benachbarten Speicherfeldes für die Referenzzählung (CNT).

4.   Verfahren nach Anspruch 1, gekennzeichnet durch den folgenden zusätzlichen Schritt:
Vorsehen einer Zwischenspeicherstelle mit einem Feld zum Speichern der Ausgangsadresse des Basispuffers (B) und mit einem anderen Feld zum Speichern der Referenzzählung (CNT), wobei der Zeiger die Adresse der Zwischenspeicherstelle bestimmt.

5.   Verfahren nach Anspruch 1, dadurch gekennzeichnet, daß der Abweichungswert (OFFS__O) in dem ersten Lokalisierer (LO) gleich ist Null.

## Revendications

1.   Procédé pour permettre l'accès partagé à une mémoire tampon dans un espace mémoire par de multiples utilisateurs, procédé dans lequel un utilisateur peut demander l'affectation d'un espace mémoire à partir du gestionnaire de mémoire et dans lequel un compte de référence est conservé pour l'espace mémoire affecté afin d'indiquer son nombre actuel d'utilisateurs ;
   caractérisé par les étapes suivantes qui sont exécutées par le gestionnaire de mémoire :
   a) sur réception d'une demande initiale (GET) provenant d'un premier utilisateur indiquant la taille (LENG__0) de la mémoire tampon demandée :
       - affecter une mémoire tampon de base (B) de taille requise,
       - renvoyer au premier utilisateur un premier indicateur de réservation d'emplacement (L0) identifiant ladite mémoire tampon de base (a) par un pointeur (PTR) une valeur de déplacement (OFFS__0) et une valeur de longueur (LENG__0), si bien qu'un utilisateur ayant reçu un indicateur de réservation d'emplacement (Li) a reçu le droit de demander l'affectation de toute partie quelconque de la mémoire tampon correspondante utilisant une demande de reproduction (REP),
       - ouvrir un compte de consultations (CNT) pour ladite mémoire tampon de base (B) qui est initialement établi à 1 ;
   b) sur réception d'une demande de reproduction (REP) d'un utilisateur ayant le droit d'accès pour la totalité ou une partie de ladite mémoire tampon de base (B) comme identifiée par le premier indicateur de réservation d'emplacement (L0) et comprenant une autre valeur de déplacement (OFFS__i) et une autre valeur de longueur (LENG__i) :
       - renvoyer un autre indicateur de réservation d'emplacement (Li) identifiant un segment de mémoire tampon qui est égal à ladite mémoire tampon de base (B) ou une partie demandée de celle-ci à l'utilisateur demandeur, ledit autre indicateur de réservation d'emplacement qui peut être transféré à un autre utilisateur, comprenant ledit pointeur (PTR) du premier indicateur de réservation d'emplacement (L0), ladite autre valeur de déplacement (OFFS__i) et ladite autre valeur de longueur (LENG__i) définissant l'emplacement et la longueur dudit segment de mémoire tampon,
       - incrémenter la valeur du compte de consultations associée à la mémoire tampon de base (B) d'une unité ;
   c) traiter toute autre demande provenant des utilisateurs pour la totalité ou une partie de tout

9

segment quelconque de la mémoire tampon identifiée par un indicateur de réservation d'emplacement se rapportant à la mémoire tampon de base (B) de la même manière que dans l'étape b ;

d) sur réception d'un message de libération (RET) pour un segment de mémoire tampon identifié par un indicateur de réservation d'emplacement quelconque (Li) :

- déterminer la mémoire tampon de base associée (B),
- décrémenter le compte de consultations respectif d'une unité ;

e) lorsque le compte de consultations (CNT) atteint la valeur de compte de zéro, désaffecter la mémoire tampon de base respective (B) ;

d'où il en résulte que la segmentation et l'affectation partielle de la mémoire tampon est possible sans que le gestionnaire de mémoire conserve une trace des utilisateurs et des segments de la mémoire tampon de base (B),

et d'où il résulte que le premier utilisateur de la mémoire tampon de base (B) ne connaîtra pas les autres utilisateurs de la mémoire tampon ou tout segment de celleci et peut renvoyer son indicateur de réservation d'emplacement par un message de libération (RET) au gestionnaire de mémoire avant un autre utilisateur d'un segment de ladite mémoire tampon de base, de sorte que la désaffectation finale de la mémoire tampon de base peut être provoquée par cet autre utilisateur lorsqu'il renvoie son indicateur de réservation d'emplacement au gestionnaire de mémoire par un message de libération (RET).

2. Procédé selon la revendication 1, caractérisé par l'étape suivante supplémentaire :

prévoir une zone mémoire pour ledit compte de consultations (CNT) à l'intérieur de ladite mémoire tampon de base (B).

3. Procédé selon la revendication 1, caractérisé par l'étape supplémentaire suivante :

prévoir une zone mémoire pour ledit compte de consultations (CNT) adjacent à la position de début de ladite mémoire tampon de base (B).

4. Procédé selon la revendication 1, caractérisé par l'étape supplémentaire suivante :

prévoir un emplacement mémoire intermédiaire contenant une zone pour mémoriser l'adresse de début de ladite mémoire tampon de base (B) et comprenant une autre zone pour mémoriser ledit compte de consultations (CNT) ledit pointeur désignant l'adresse dudit emplacement mémoire intermédiaire.

5. Procédé selon la revendication 1, caractérisé en ce que la valeur de déplacement (OFFS_0) dans ledit premier indicateur de réservation d'emplacement (L0) est égal à zéro.

FIG. 1

FIG. 2

A) | GET | LENG _ ø |

B) Li = | PTR | OFFS_i | LENG_i |  ( LOCATOR )

C) | REP | | Lj | | OFFS_i | LENG_i |

D) | RET | | Li | |

**FIG. 3**

| PTR | START ADDR. | LENGTH | CNT |
|-------|-------------|--------|-----|
| (280) | 16'824 | 512 | 3 |
| (304) | 18'240 | 128 | 1 |
| (328) | 19'226 | 256 | 4 |

BUFFER
ALLOCATION
TABLE

**FIG. 4**

MEMORY MANAGEMENT

P∅

1) GET (LENG_∅)

(A)

ALLOCATE B
(& SET CNT=1)

2) LOCATOR (L∅)

(L∅)

3) REP (L∅,OFFS_1
LENG_1)

(B)

INCR.CNT

4) LOCATOR (L1)

5)
TRANS-
FER
LOCATOR
(L1)

10) RET (L∅)

P1

6) REP (L1,OFFS_2,
LENG_2)

(C)

INCR.CNT

(L1)

7) LOCATOR (L2)

8)
TRANS-
FER
LOCATOR
(L2)

(D)

DECR.CNT
& TEST

11) RET (L1)

P2

(E)

DECR.CNT
& TEST

(L2)

(F)

DECR.CNT
& TEST

9) RET (L2)

(G)

DEALLOCATE
BUFFER

B(L∅)

CNT

B

SZ(L2)

S1(L1)

MEMORY

**FIG. 5**

13

FIG.6